# NEW EUROPEAN PATENT SPECIFICATION

(11) **EP 0 912 678 B2**
(45) Date of publication and mention of the opposition decision: **21.06.2006**
(45) Mention of the grant of the patent: 28.05.2003
(21) Application number: 97928183.9
(22) Date of filing: 10.06.1997
(51) Int. Cl.: C11D 3/20, C11D 3/00, C11D 1/75, C11D 1/72, A01N 31/08, A01N 31/04, A01N 31/16

(54) **ANTIMICROBIAL CLEANING COMPOSITIONS CONTAINING AROMATIC ALCOHOLS OR PHENOLS**
ANTIMIKROBIELLE REINIGUNGSZUSAMMENSETZUNGEN MIT AROMATISCHEN ALKOHOLEN ODER PHENOLEN
COMPOSITIONS DETERGENTES ANTIMICROBIENNES CONTENANT DES ALCOOLS OU PHENOLS AROMATIQUES

(30) Priority: 03.07.1996 GB 9613967
(43) Date of publication of application: 06.05.1999
(73) Proprietor: UNILEVER PLC, London EC4P 4BQ (GB); UNILEVER N.V., 3013 AL Rotterdam (NL)
(72) Inventor: DAS, Julie, Rosalyn, Manchester M25 9NA (GB); RABONE, Kenneth, Leslie, Wirral,Merseyside L63 2QP (GB)
(74) Representative: Rosen Jacobson, Frans Lucas M.
(86) International application number: PCT/EP1997/003062
(87) International publication number: WO 1998/001524

(56) References cited:
- EP-A- 0 040 882
- EP-A- 0 106 266
- EP-A- 0 126 545
- EP-A- 0 590 722
- EP-A- 0 596 493
- WO-A-89/12673
- WO-A-93/11211
- WO-A-97/25106
- WO-A-97/31092
- WO-A-97/31093
- CH-A- 685 347
- DE-A- 1 928 192
- DE-A- 2 536 107
- DE-A- 2 811 756
- DE-A- 4 243 468
- DE-A- 4 243 475
- US-A- 3 824 190
- US-B- 4 414 128
- EPA PRODUCT PROPERTIES TEST GUIDELINES OPPTS 830.7570 PARTITION COEFFICIENT(n-Octanol/Water), Estimation by liquid Chromatography, August 1996
- Extract Regystry -Database, American Chemical Society-STN International Database, CAS Registry number 97-53-0, Eugenol
- Online Log P Calculation for 2-methxy-4-(2-propenyl)-phenoö/Eugenol(CAS Registry number 97-53-0), using LogKow/ KowWin Program on http://esc.syrres.com/interkow/kowdemo.htm
- Shell Chemicals information Neodol;Know Win log P calculation of cinnamyl alcohol, methylbenzylcarbinol,phenyl ethyl alcohol,benzyl alcohol,Zmethoxyphenol, zphenexyethanol

## Description

### Technical Field

The present invention relates to an antimicrobial cleaning composition containing surfactant and a hygiene agent, to the use of specified surfactants to improve the activity of the hygiene agent and to a method of treating surfaces with the said composition.

### Background to the invention

Hard-surface cleaning compositions generally comprise one or more surfactants, and, optionally, one or more hygiene agents.

Typically, the surfactants used in such cleaning compositions are selected from anionic, nonionic, amphoteric and cationic surfactants. Nonionics are very commonly used due to their effectiveness on fatty soils and the ease with which their foaming can be controlled. Of these surfactants, nonionics are reported as showing low biocidal activity, whereas certain anionic, cationic and amphoteric surfactants show biocidal activity under specific conditions of, for example, pH and concentration. Generally, the biocidal activity of surfactants is, with a few notable exceptions, low and it is commonplace to add a separate hygiene agent to compositions.

Typical hygiene agents include strong acids, alkalis, phenolics and oxidants such as peracids and hypohalites. These, of which a typical example is hypochlorite, are generally highly reactive species which exhibit this reactivity in terms of one or more of, short shelf life, toxic, corrosive and irritant properties. In general, these reactive components are required at relatively high levels in formulations. Other less chemically reactive hygiene agents, such as 2,4,4'-trichloro-2'-hydroxy diphenyl ether (available in the marketplace as IRGASAN DP300 [RTM]), are effective at relatively low concentrations but are more expensive than simpler species and may be specific as regards their spectrum of activity. Many organic acids, including benzoic, salicylic and sorbic are known as preservatives in cosmetics and some food products, but these preservatives generally show lower biocidal activity than the above-mentioned chemically reactive hygiene agents when used at the same level.

EP 0126545 discloses abrasive, hard-surface cleaning compositions comprising terpenes or benzyl alcohol and nonionic surfactants to provide for cleaning of greasy and particulate soils. The compositions disclosed are preferably of pH 8-11.

WO 89/12673 discloses acaricidal compositions which comprise benzyl alcohol (as an acaricide) and nonionic surfactants. The pH of the formulation is preferably 7.5-12.5 neat and 3.0-10.0 on dilution. The surfactants used are specialised and mixed to give extremely low interfacial tension and comprise either a phenol ethoxylate or an amphoteric surfactant. Cationic surfactants are included in the exemplary formulations to confer antimicrobial properties.

WO 93/11211 discloses the use of low levels of phenol derivatives and oxyethylated aliphatic alcohol derivatives in alkaline hard surface cleaning compositions. The maximum level of phenol derivative is 0.03%wt.

DE 2 811 756 discloses concentrated cleaning compositions comprising alkoxylated alkanols and biocides such as phenoxy ethanol, phenoxy isopropenol.

WO 94/14942 discloses neutral cleaning compositions which contain a combination of alcohols including benzyl alcohol together with ethoxylated nonionic surfactants. The pH range specified for these composition is 9-5.

Us 4311618 discloses cleaning formulations which can contain a broad range of nonionic surfactants of HLB ranging from 5-20 and optionally substituted aromatic alcohols and/or phenols as hygiene agents.

Natural phenolics are known to include a number of biocidal compounds including Thymol and Carvacrol (Daouk et al. J. Food Prot (1995) 58 (10) 1147-9) which have been shown to be effective against moulds, yeasts and bacteria (J Essent. Oil. Res. (1995) 7 (3) 299-303).

In hard surface cleaning it is often necessary to disinfect a surface. A 'disinfectant' can be understood to be a hygiene agent which shows a 100,000 fold or better reduction in the number of viable micro-organisms in a specified culture when used at a level of around 0.5 wt%. This is generally known as a 'log 5 kill'.

Some surfactants have been found to potentiate the effects of certain hygiene agents. DE 3619375 (Henkel) discloses that alkyl polyglycoside (APG) surfactants show a synergy with relatively low molecular weight alcohols and organic acids as regards hygiene and discloses compositions which comprise APG and organic acids. These compositions are used at strongly acidic pH, generally below pH 3.

Other surfactant/biocide combinations are believed to show a reduced effect as compared with the biocide per se. In 'Surface Active Agents' (Porter 1990, Elsevier) it is stated that while low concentrations of nonionics (below the critical micelle concentration) can have a synergistic effect on quaternary compounds when these have biocidal properties, nonionic surfactant in general have an inhibiting effect on biocides. One theory which has been put forward for this is that the biocide is adsorbed into micelles of the surfactant and therefore become less available for action. Similar results have been noted for phenols (cit ultra, page 107, section 4.5.4) and it is believed that relatively large concentrations of nonionic surfactant are likely to destroy the biocidal activity of phenols. Synergy has been reported only for a ratio where phenol is in excess of nonionic surfactant, antagonism is shown for all other ratios.

### Brief Description of the Invention

We have determined that a marked synergy as regards antimicrobial effectiveness is exhibited between aromatic alcohols or phenols, other than phenol itself and ethoxylated alkanol nonionic surfactants, outside of the physiological pH range.

Accordingly a first aspect of the present invention provides a microbiocidal, non-abrasive, composition of pH above 9 or at or below 5, which comprises:
a) 0.15-15wt% of an optionally substituted aromatic alcohols or phenols, other than phenol per se, of the general formula:

   HO.R₁.Aryl(R₂)ₙ

   wherein: R₁ is absent or is C1-C6 alkyl, alkenyl or alkoxy, R₂ is absent or one or more ring substituents selected from C1-C6 alkyl, alkeriyl or alkoxy, n is 0-5, provided that R₁ is not absent when n=0, and which has log(P_{oct})> 3, and
b) 0.1-30wt% of nonionic surfactant chosen from ethoxylated alkanols with an HLB of 9-14, and amine oxides

A second aspect of the present invention subsists in the use of an optionally substituted aromatic alcohols or phenols, other than phenol per se, of the general formula: HO.R₁.Aryl(R₂)ₙ wherein R₁ is absent or is C1-C6 alkyl, alkenyl or alkoxy, R₂ is absent or one or more ring substituents selected from C1-C6 alkyl, alkenyl or alkoxy, and n is 0-5, provided that R₁ is not about when n=0, and which has log (P_{oct}) > 3, as a biocidal activity improving additive in a composition of pH at or below 5 or above 9 which is free of abrasives and comprises 0.1-30wt% of an ethoxylated alkanol with an HLB of 9-14 or an amine oxide.

A third aspect of the present invention provides a method of cleaning and disinfecting a surface which comprises the step of treating said surface with an abrasive-free cleaning composition of pH above 9 or at or below 5, which comprises:
a) 0.15-15wt% of an optionally substituted aromatic alcohols or phenols, other than phenol per se, of the general formula:

   HO.R₁.Aryl(R₂)ₙ

   wherein: R₁ is absent or is C1-C6 alkyl, alkenyl or alkoxy, R₂ is absent or one or more ring substituents selected from C1-C6 alkyl, alkenyl or alkoxy, n is 0-5, provided that R₁ is not absentwhen n=0, and which has log(P_{oct})>3, and
b) 0,1-30wt% of an ethoxylated alkanol, with an HLB of 9-14 or an amine oxide.

As discussed above, alkoxylated alcohol surfactants of HLB 9-14 are known to be inhibitors bacterial growth but are only weakly biocidal at typical formulation pH's. In the presence of the specified alcohols or phenols a synergy with the specified nonionic surfactants provides both effective cleaning and biocidal activity. These properties are desirable in a cleaning composition for hygiene purposes as it is important to both to ensure a high kill of bacteria and removal soil so as to retard reinfection and regrowth of bacterial populations. It is considered surprising to obtain such a synergy with nonionic-rich ratios. Thus with the benefit of the present invention the important features of effective microbial kill and improved soil removal are both attained with a relatively simple and hence cost-effective formulation.

Without wishing to be limited by any theory of operation, it is believed that the presence of the aromatic alcohol or phenol together with the surfactant forms 'pores' in the cytoplasmic membrane of the bacteria through which the contents of the cell may be exchanged with the ambient. This has been confirmed by studies with the fluorescent probe Propidium iodide, which is not taken up by cells with intact membranes.

### Detailed Description of the Invention

In order that the invention may be further understood it will be described hereafter with reference to preferred features and materials.

### Nonionics

Nonionic surfactants are present in the compositions of the invention. These surfactants are believed to engage in a synergistic interaction with the aromatic alcohol or phenol so as to improve the disinfecting qualities of the composition. The nonionic surfactants, as noted above, are the ethoxylated alkanols arid amine oxides.

Suitable ethoxylated alkanol based detergent active compounds can be broadly described as compounds produced by the condensation of ethylene oxide groups, which are hydrophillic in nature, with an organic hydrophobic compound which may be aliphatic or alkyl aromatic in nature. The length of the hydrophillic or polyoxyethylene radical which is condensed with any particular hydrophobic group can be readily adjusted to yield a water-soluble compound having the desired degree of balance between hydrophillic and hydrophobic elements.

Particular examples include the condensation product of aliphatic alcohols having from 8 to 22 carbon atoms in either straight or branched chain configuration with ethylene oxide, such as a coconut oil ethylene oxide condensate having from 3 to 10 moles of ethylene oxide per mole of coconut alcohol. Alkyl phenol ethoxylates do not fall within the scope of the term ethoxylated alkanol nonionic surfactants as it is used in this specification.

The HLB of an particular ethoxylated alcohol nonionic surfactant can be determined by calculation or by measurement. The HLB falls in the range 9-14.

The amount of nonionic detergent active to be employed in the composition of the invention will preferably be from 1 to 20%wt, and most preferably from 3 to 10%wt for non-concentrated products, with a concentration of around 7% being typical of embodiments. Concentrated products will generally have 10-20%wt nonionic surfactant present, whereas dilute products suitable for spraying will have 0.1-5%wt nonionic surfactant present.

Typically, the alkoxylated nonionic surfactant is an ethoxylated alcohol having a chain length of C₈-C₁₄ and 4-10 ethoxy groups per molecule.

It is believed that the critical micelle concentration (CMC) of the ethoxylated nonionic surfactants should preferably be below 10⁻³ moles/litre, more preferably in the range 10⁻³ to 10⁻⁵ moles/litre.

DOBANOL 91-8 (TM, ex. Shell) a C₉₋₁₁ alcohol with, on average, eight moles of ethoxylation had been found to be a suitable nonionic surfactant in compositions according to the invention. This material has a calculated HLB of 13.7 and is believed to have a CMC of 7.8 x 10⁻⁴ moles/litre.

Amine oxides are suitable alternative surfactants. It is believed that these behave as nonionic surfactants at pH's above 2. Preferred amine oxides are monoalkyl dimethyl amine oxides, preferably wherein the alkyl group is C₆-C_{12'} Particularly preferred amine oxides are the C₆-C₁₀ dimethyl amine oxides.

The amount of amine oxide detergent active to be employed in the composition of the invention will preferably be from 1 to 20%wt, and most preferably from 3 to 10%wt for non-concentrated products. Concentrated products will generally have 10-20%wt amine oxide surfactant present, whereas dilute products suitable for spraying will have 0.1-5%wt amine oxide surfactant present.

### Aromatic alcohols or phenols

As noted above the compositions of the invention comprise an optionally substituted aromatic alcohols or phenol, other than phenol per se, of the general formula:

HO.R₁.Aryl(R₂)ₙ

wherein: R₁ is absent or is branched or linear C₁-C₆ alkyl, alkenyl or alkoxy, R₂ is absent or one or more ring substituents selected from branched or linear C1-C6 alkyl, alkenyl or alkoxy, and n is 0-5, provided that R₁ is not absent when n=0, and which has log(P_{oct})>3.

When n>1 the substituent groups R₂ need not be the same. Preferably the R₂ group or groups are selected from isopropyl, methyl, methoxy and 2-propenyl. Preferably at leastone of the substituents R₂ is located at the 2-position or the 5-position of the phenol. More preferably the compositions according to the invention comprise a di-substituted phenol, i.e. R₁ is absent and n=2. In the instance of di-substituted phenols is preferred that the two substituent R₂ groups present are different.

Particularly preferred compositions include:
Thymol (5-methyl (2-isopropyl phenol)),
Carvacrol (5-isopropyl 2-methyl phenol),
or mixtures thereof.

The log(P_{oct}) of the aromatic alcohols or phenols, where P_{oct} is the octanol/water partition co-efficient of the material is greater than 3, log(P_{oct}) is >3 and preferably in the range 3-4. It is believed that those materials with preferred partition co-efficients show particularly effective synergistic biocidal properties.

It will be understood that none of the alcohols or phenols are acids and the scope of the invention does not, for example, extend to benzoic acid derivatives such as salicylic acid and further derivatives thereof.

As noted above, levels of the aromatic alcohols or phenols are 0.15-15%wt on composition. Preferably, the level of aromatic alcohol or phenol will be 0.5-10% in neat compositions, with levels of 1-5%wt being especially preferred. It is preferred that the ratio of nonionic surfactant to aromatic alcohol or phenol is in the range 20:1 to 1:1, more preferably 10:1 to 3:1.

### pH:

Compositions according to the invention preferably have a pH above 2 and below 12, i.e. 2- 5 below or above 9-12.

Conveniently, the composition has a pH of 3.2-4.5 or 9.5-11.0. Compositions having a pH of less than 3.0 may damage certain types of enamel surfaces. Compositions having a pH in the physiological range (greater than 5 to less than 9) will show significantly reduced log kill against micro-organisms. Compositions having a very high pH can be hazardous to the user.

### Minors and Optional Components

The composition according to the invention can contain other minor, unessential ingredients which aid in their cleaning performance and maintain the physical and the chemical stability of the product.

Preferably, the composition can contain detergent builders. In general, the builder, when employed, preferably will form from 0.1 to 25% by weight of the composition. Sodium carbonate, sodium hydrogen carbonate and mixtures thereof are suitable builders.

Optionally, the composition can include one or more amphoteric surfactants, preferably betaines, or other surfactants such as alkyl-amino-glycinates. Betaines are preferred for reasons of cost, low toxicity and wide availability.

Typically betaines in compositions according to the invention are the amido-alkyl betaines, particularly the amido-propyl betaines, preferably having an aliphatic alkyl radical of from 8 to 18 carbon atoms and preferably having a straight chain. These betaines are preferred as they are believed to comprise relatively low levels of nitrosamine precursors although other betaines, such as alkyl betaines, can be used in the compositions of the invention.

Typical levels of amphoteric range from 0.01 to 8%, with levels of 1-5wt%, particularly around 2% being preferred for normal compositions and up to four times the concentration being present in so called, concentrated products. As with the nonionic surfactant, lower levels of around 0.05-1% will be employed in sprayable products and higher levels of, typically, around 4%wt in concentrates.

Preferably the compositions of the invention should be free of, or have relatively low levels of anionic surfactants present. It is preferred that less than 33%wt of the total surfactant present is anionic and preferably that less than 10% of the surfactant present is anionic.

Metal ion sequestrants, including ethylene diaminetetra-acetates, amino poly-phosphonates (such as those in the DEOUEST^{R} range) and phosphates and a wide variety of other poly-functional organic acids and salts, can also be employed. It is believed that the hygiene performance of the composition is improved by the presence of a metal ion sequestrant.

For acid compositions, citrate is particularly preferred as this functions as a buffer maintaining the composition at a pH in the range 3-5 on dilution. Other buffers can be employed.

Typical levels of citrate range from 0.5-5%, with higher levels of 5-10% being used in concentrates and lower levels of 0.1-1 % being used in sprayable products. Citric can be replaced by other suitable buffering agents to maintain the pH in this range. Citric is also preferred for environmental reasons and a lack of residues as it is believed to be the most cost/weight effective acid.

Suitable hydrotropes include, alkali metal toluene sulphonates, urea, alkali metal xylene and cumene sulphonates, polyglycols, >20EO ethoxylated alcohols and glycols, Preferred amongst these hydrotropes are the sulphonates, particularly the cumene, xylene and toluene sulphonates. Typical levels of additional hydrotrope range from 0-5% for the sulphonates. Hydrotropes are not always required for dilute, sprayable products, but may be required if lower EO or longer alkyl ethoxylates are used or the cloud point needs to be raised considerably. The cumene sulphonate is the most preferred hydrotrope.

Compositions according to the invention can also contain, in addition to the ingredients already mentioned, various other optional ingredients such as, further solvents, colourants, optical brighteners, soil suspending agents, detersive enzymes, compatible bleaching agents, gel-control agents, freeze-thaw stabilisers, further bactericides, perfumes and opacifiers.

The most preferred formulations according to the present invention, excluding minors, comprise:

| | | w/v percent |
|---|---|---|
| a) | sodium carbonate decahydrate | 1.14 |
| | sodium hydrogen carbonate | 0.08 |
| | Dobanol 91-8 | 5.0 |
| | Thymol | 1.0 |
| | Water to | 100 |

| | | |
|---|---|---|
| b) | sodium carbonate decahydrate | 1.14 |
| | sodium hydrogen carbonate | 0.08 |
| | Dobanol 91-8 | 5.0 |
| | Carvacrol | 1.0 |
| | Water to | 100 |

In order that the present invention can be further understood it will be illustrated herein after by reference to the following examples:

### Examples

### Example 1: alcohol ethoxylate surfactants;

Microbial cultures were maintained at -80°C using the "Microbank" [TM] storage system (Pro-Lab Diagnostics, Bromborough, UK). Vials (25) each containing 25 beads were inoculated simultaneously by removing the cryopreservative from each vial, inoculating with culture to desired turbidity and returning cryopreservative to the vial containing the beads. Manufacturers instructions were then followed for removal of cryopreservative.

A bead containing micro-organisms (*E. coli)* was taken from storage at -80°C and cultured in Nutrient Broth No. 2 (supplied by Oxoid Unipath [TM]) at 37°C with constant agitation for 24 hours in a shaking waterbath. Cells were recovered by transferring Into 50ml centrifuge tubes, centrifugation in a Mistral [TM] 1000 Centrifuge for 10 min at 4100 rpm and re-suspended in maximum recovery diluent (peptone 0.1 percent, sodium chloride 0.85 percent). This procedure is believed to give a bacterial suspension of 10°-10¹⁰ cfu/ml.

This suspension was diluted tenfold with maximum recovery diluent and samples were exposed to test solutions of nonionic surfactant and aromatic alcohols or phenols and to control formulations as listed in Tables 1-4 below. Acidic formulations are shown in examples 2a-2b.

All tests were carried out using the microplate method for a 5 minute contact time at 20°C with a 1 in 30 dilution of the formulation. Formulations were buffered with a mixture of sodium carbonate (1.14 w/v percent decahydrate) and sodium hydrogen carbonate (0.08 w/v percent) to a pH of 10.5: the pH after dilution with distilled water is given in the Tables.

In these experiments the nonionic surfactant used was Dobanol 91-8 [TM] and the alcohols and phenols are identified as follows:

| **trivial name** | **systematic name** |
|---|---|
| BA: benzyl alcohol | phenyl methanol |
| PEA: - | 2-phenyl ethanol |
| THY: Thymol | 2-isopropyl-5-methylphenol |
| CAR: Carvacrol | 5-isopropyl-2-methylphenol |
| EUG: Eugenol | 2-methoxy-4[2-propenyl]phenol |

After exposure, viable organisms were determined by culturing on Tryptone-soya agar for 24/48 hours at 30/37°C. Log decimal reductions were determined from the viable counts as means of four replicates.

Tables 1-4 shows the selective synergy between nonionic surfactant and the aromatic alcohols or phenols. All concentrations are in mM for the phenols and alcohols and %wt for the surfactant. Embodiments of the invention are examples 17-19, 22-23, and 26-27 in table 1 Examples comprising benzyl alcohol (BA), 2-phenyl ethanol (PEA), or Eugenol are outside the claimed range.

Results which give a log kill greater than 5 are less precise and imply a complete or almost complete kill under the test conditions. From the results given in Tables 1-4 it can be seen that the nonionic alone has no significant antimicrobial properties in this test (see comparative example 1).

Taken alone, only thymol has appreciable antimicrobial properties and then only when present at a level above 2.23 mM (i.e. at 4.47mM: see example 16). However the combinations of phenols and alcohols with the nonionic surfactant show a clear synergy.

**Table 1**

| **Ex.** | **Surfactant** | **BA*** | **PEA*** | **THY** | **CAR** | **EUG*** | **Mean Log Red** |
|---|---|---|---|---|---|---|---|
| 1 | 0.17 | - | - | - | - | - | 0.96 |
| 2 | - | 3.1 | - | - | - | - | 0.04 |
| 3 | - | 6.2 | - | - | - | - | 0.00 |
| 4 | - | 31.0 | - | - | - | - | 0.21 |
| 5 | 0.17 | 3.1 | - | - | - | - | 2.07 |
| 6 | 0.17 | 6.2 | - | - | - | - | 2.22 |
| 7 | 0.17 | 31.0 | - | - | - | - | 2.83 |
| 8 | - | - | 2.75 | - | - | - | 0.00 |
| 9 | - | - | 5.5 | - | - | - | 0.01 |
| 10 | - | - | 13.67 | - | - | - | 0.00 |
| 11 | 0.17 | - | 2.75 | - | - | - | 2.18 |
| 12 | 0.17 | - | 5.5 | - | - | - | 2.36 |
| 13 | 0.17 | - | 13.67 | - | - | - | 2.78 |
| 14 | - | - | - | 1.125 | - | - | 0.00 |
| 15 | - | - | - | 2.23 | - | - | 0.49 |
| 16 | - | - | - | 4.47 | - | - | 7.94 |
| 17 | 0.17 | - | - | 1.125 | - | - | 4.65 |
| 18 | 0.17 | - | **-** | 2.23 | - | - | 7.94 |
| 19 | 0.17 | - | - | 4.47 | - | - | 7.94 |
| 20 | - | - | - | - | 1.12 | - | 0.97 |
| 21 | - | - | - | - | 2.23 | - | 1.40 |
| 22 | 0.17 | - | - | - | 1.12 | - | 5.26 |
| 23 | 0.17 | - | - | - | 2.23 | - | 6.99 |
| 24 | - | - | - | - | - | 2.03 | 0.91 |
| 25 | - | - | - | - | - | 4.07 | 1.01 |
| 26 | 0.17 | - | - | - | - | 2.03 | 4.04 |
| 27 | 0.17 | - | - | - | - | 4.07 | 4.43 |

| | | | | | | | |
|---|---|---|---|---|---|---|---|
| * outside the claimed range. | | | | | | | |

**Table 2:**

| **Synergy with Thymol (2-isopropyl-5-methylphenol) *** | | | | |
|---|---|---|---|---|
| **Dobanol 91-8 (percent)** | **Thymol (percent)** | **pH (diluted)** | **Mean Log (reduction) of *E. coli*** | **Standard Deviation** |
| 5.0 | 0 | 9.4 | 1.0 | 0.3 |
| 0 | 0.5 | 10.3 | 0 | 0 |
| 5.0 | 0.5 | 10.3 | 4.7 | 0.3 |
| 0 | 1.0 | 10.2 | 0.5 | 0.3 |
| 5.0 | 1.0 | 10.3 | >7.9 | 0 |

| | | | | |
|---|---|---|---|---|
| * outside the claimed range. | | | | |

**Table 2a:**

| **Synergy with Thymol under acid conditions (pH 4.00)*** | | | |
|---|---|---|---|
| **Dobanol 91-8 (percent)** | **Thymol (percent)** | **pH (diluted)** | **Mean Log (reduction) or S. aureus** |
| 0 | 0 | 4.0 | 0.25 |
| 5.0 | 0 | 4.0 | 0.79 |
| 0 | 0.5 | 4.0 | 0.11 |
| 5.0 | 0.5 | 4.0 | 0.03 |
| 0 | 1.0 | 4.0 | 0.15 |
| 5.0 | 1.0 | 4.0 | 2.48 |

**Table 2b:**

| **Synergy with Thymol under acid conditions (pH 5.00)*** | | | |
|---|---|---|---|
| **Dobanol 91-8 (percent)** | **Thymol (percent)** | **pH (diluted)** | **Mean Log (reduction) of *S. aureus*** |
| 0 | 0 | 5.0 | 0.14 |
| 5.0 | 0 | 5.0 | 0.07 |
| 0 | 0.5 | 5.0 | 0.17 |
| 5.0 | 0.5 | 5.0 | 0.26 |
| 0 | 1.0 | 5.0 | 0.04 |
| 5.0 | 1.0 | 5.0 | 1.28 |

| | | | |
|---|---|---|---|
| ***** Outside the claimed range. | | | |

**Table 3:**

| **Synergy with 2-phenyl ethanol outside the claimed range** | | | | |
|---|---|---|---|---|
| **Dobanol 91-8 (percent)** | **2-phenyl ethanol (percent)** | **pH (diluted)** | **Mean Log (Reduction) *of E.coli*** | **Standard Deviation** |
| 5.0 | 0 | 9.4 | 1.0 | 0.3 |
| 0 | 1.0 | 10.4 | 0 | 0 |
| 5.0 | 1.0 | 10.2 | 2.2 | 0.2 |
| 0 | 2.0 | 10.3 | 0.0 | 0.0 |
| 5.0 | 2.0 | 10.3 | 2.4 | 0.4 |
| 0 | 5.0 . | 10.3 | 0 | 0 |
| 5.0 | 5.0 | 10.3 | 2.8 | 0.5 |

**Table 4:**

| **Synergy with benzyl alcohol outside the claimed range** | | | | |
|---|---|---|---|---|
| **Dobanol 91-8 (percent)** | **benzyl alcohol (percent)** | **pH (diluted)** | **Mean Log (Reduction) of *E.coli*** | **Standard Deviation** |
| 5.0 | 0 | 9.4 | 1.0 | 0.3 |
| 0 | 1.0 | 10.3 | 0 | 0.1 |
| 5.0 | 1.0 | 10.2 | 2.1 | 0.1 |
| 0 | 2.0 | 10.4 | 0.0 | 0.0 |
| 5.0 | 2.0 | 10.3 | 2.2 | 0.4 |
| 0 | 10.0 | 10.4 | 0.2 | 0.4 |
| 5.0 | 10.0 | 10.2 | 2.8 | 0.5 |

### Example 2: amine oxides;

All tests were carried out using the microplate method for a 5 minute contact time at 20°C with a 1 in 30 dilution of the formulation. Formulations were buffered with a mixture of sodium carbonate (1.14 w/v percent decahydrate) and sodium hydrogen carbonate (0.08 w/v percent) to a pH of 9.5 (adjusted with HC1). All examples were performed in a final formulation level of 7%wt active prior to dilution. The final concentration of Thymol (ex Sigma) in the neat formulation was 1%wt. The C8 amine oxide was Admox 8 (TM: ex. Albemarle), the C12 amine oxide was Admox 12 (TM: ex. Albemarle). After exposure, viable organisms were determined by culturing on Tryptone-soya agar for 24/48 hours at 37°C. Log decimal reductions were determined from the viable counts as means of four replicates and are given in Table 5 below.

**Table 5:**

| **Amine Oxide formulations** | | | | |
|---|---|---|---|---|
| **Amine Oxide** | ***S*. *aureus*** | ***S. aureus* (+ Thymol)** | ***E. coil*** | ***E. coli* (+ Thymol)** |
| none | 0.0 | 0.05 | 0.0 | 0.28 |
| C8 | 0.4 | 4.3 | 0.3 | >5.0 |
| C8 + C12 | 0.4 | 5.0 | 0.2 | >5.0 |
| C12 | 0.7 | 1.8 | 0.6 | >5.0 |

From the results it can be seen that, the combination of amine oxide and Thymol provides a synergistic increase in biocidal activity over the amine oxide or Thymol per se, for the C8 amine oxide and the C8 amine oxide in combination with the C12.

## Claims

1. A microbiocidal, non-abrasive, composition of pH above 9 or at or below 5, which comprises:
(a) 0.15-15wt% of an optionally substituted aromatic alcohol or phenol, other than phenol per se, of the general formula: HO.R₁.Aryl(R₂)ₙ wherein: R₁ is absent or is C₁-C₆ alkyl, alkenyl or alkoxy, R₂ is absent or one or more ring substituents selected from C₁-C₆ alkyl, alkenyl or alkoxy, n is 0-5, provided that R₁ is not absent when n=0, and which has log(P_{oct})>3, and
(b) 0.1-30wt% of a nonionic surfactant chosen from ethoxylated alkanols having an HLB of 9-14, and amine oxides.

2. Composition according to claim 1 wherein the ethoxylated alcohol has a chain length of C₈-C₁₄ and has 4-10 ethoxy groups per molecule.

3. Composition according to claim 1 wherein the amine oxide is a mono C₆-C₁₂ alkyl dimethyl amine oxide.

4. Composition according to claim 1 comprising a phenol wherein the R₂ group or groups are selected from isopropyl, methyl, methoxy and 2-propenyl.

5. Composition according to claim 1 comprising a phenol wherein at least one of the substituents R₂ is located at the 2-position or the 5-position of the phenol.

6. Composition according to claim 1 comprising a phenol wherein R₁ is absent and n=2.

7. Composition according to claim 1 comprising a phenol or aromatic alcohol selected from 5-methyl (2-isopropyl phenol), 5-isopropyl-2-methylphenol, or mixtures thereof.

8. Composition according to claim 1 wherein the ratio of nonionic surfactant to aromatic alcohol or phenol is in the range 20:1 to 1:1.

9. A method of disinfecting a surface which comprises the step of treating said surface with a composition according to any one of claims 1-8.

## Patentansprüche

1. Mikrobizide, nicht-schleifende Zusammensetzung mit einem pH-Wert oberhalb 9 oder bei oder unterhalb 5, die umfasst:
a) 0,15-15 Gewichtsprozent eines gegebenenfalls substituierten aromatischen Alkohols oder Phenols, verschieden von Phenol an sich, der allgemeinen Formel:
HO.R₁.Aryl(R₂)ₙ,
worin: R₁ nicht vorliegt oder C₁-C₆-Alkyl, Alkenyl oder Alkoxy darsteltt, R₂ nicht vorliegt oder einen oder mehrere Ringsubstituenten, ausgewählt aus C₁-C₆-Alkyl, Alkenyl oder Alkoxy, darstellt, n 0-5 ist, mit der Maßgabe, dass R₁ vorliegt, wenn n=0, und Iog(P_{oct}> > 3 aufweist,
und
b) 0,1-30 Gewichtsprozent eines nichtionischen Tensids, ausgewählt aus ethoxylierten Alkanolen mit einem HLB-Wert von 9-14 und Aminoxiden.

2. Zusammensetzung nach Anspruch 1, worin der ethoxylierte Alkohol eine Kettenlänge von C₈-C₁₄ aufweist und 4-10 Ethoxygruppen pro Molekül aufweist.

3. Zusammensetzung nach Anspruch 1, worin das Aminoxid ein Mono-C₆-C₁₂-alkyldimethylaminoxid darstellt.

4. Zusammensetzung nach Anspruch 1, umfassend ein Phenol, worin die Gruppe oder Gruppen R₂ aus Isopropyl, Methyl, Methoxy und 2-Propenyl ausgewählt sind.

5. Zusammensetzung nach Anspruch 1, umfassend ein Phenol, worin mindestens einer der Substituenten R₂ an der 2-Position oder der 5-Position von dem Phenol lokalisiert ist.

6. Zusammensetzung nach Anspruch 1, umfassend ein Phenol, worin R₁ nicht vorliegt und n=2.

7. Zusammensetzung nach Anspruch 1, umfassend ein Phenol oder aromatischen Alkohol, ausgewählt aus 5-Methyl-(2-isopropylphenol), 5-Isopropyl-2-methylphenol oder Gemischen davon.

8. Zusammensetzung nach Anspruch 1, worin das Verhältnis von nichtionischem Tensid zu aromatischem Alkohol oder Phenol im Bereich 20:1 bis 1:1 liegt.

9. Verfahren zum Desinfizieren einer Oberfläche, das den Schritt des Behandelns der Oberfläche mit einer Zusammensetzung nach einem der Ansprüche 1-8 umfasst.

## Revendications

1. Composition microbicide non abrasive ayant un pH supérieur à 9 ou égal ou inférieur à 5, comprenant :
a) 0,15 à 15 % en poids d'alcools aromatiques ou de phénols optionnellement substitués, autres que le phénol en tant que tel, ayant la formule générale suivante :
HO.R₁.Aryle(R₂)ₙ
dans laquelle : R₁ est absent ou est un alkyle, un alkényle ou un alkoxy en C₁ - C₆, R₂ est absent ou un ou plusieurs substituants d'anneau sélectionnés à partir de l'alkyle, de l'alkényle ou de l'alkoxy en C₁ - C₆, n est 0 - 5, à condition que R₁ ne soit pas absent lorsque n = 0, et qui a un log (P_{oct}) > 3, et
b) de 0,1 à 30 % en poids de tensioactif non ionique choisi à partir des alcanols éthoxylés ayant une valeur HLB de 9 - 14, et des oxydes d'amine.

2. Composition selon la revendication 1, dans laquelle l'alcool éthoxylé a une longueur de chaîne de C₈ - C₁₄ et a de 4 à 10 groupes éthoxy par molécule.

3. Composition selon la revendication 1, dans laquelle l'oxyde d'amine est un oxyde d'alkyle en C₆ - C₁₂ diméthyle amine.

4. Composition selon la revendication 1, comprenant un phénol dans lequel le ou les groupes R₂ sont sélectionnés à partir de l'isopropyle, du méthyle, du méthoxy et du 2 - propényle.

5. Composition selon la revendication 1, comprenant un phénol dans lequel au moins l'un des substituants R₂ est situé à la position 2 - ou à la position - 5 du phénol.

6. Composition selon la revendication 1, comprenant un phénol dans lequel R₁ est absent et n = 2.

7. Composition selon la revendication 1, comprenant un phénol ou un alcool aromatique sélectionné à partir du 5 - méthyle (2 - isopropyle phénol), du 5 - isopropyle - 2 - méthylphénol ou des mélanges de ceux-ci.

8. Composition selon la revendication 1, dans laquelle le rapport entre le tensioactif non ionique et l'alcool aromatique ou le phénol est compris dans la gamme allant de 20 pour 1 à 1 pour 1.

9. Procédé de désinfection d'une surface comprenant l'étape consistant à traiter ladite surface avec une composition selon l'une quelconque des revendications 1 - 8.
